# EUROPEAN PATENT APPLICATION

(11) **EP 4 496 273 A1**
(43) Date of publication of application: **22.01.2025**
(21) Application number: 23784068.1
(22) Date of filing: 11.01.2023
(51) Int. Cl.: H04L 12/28

(54) **BANDWIDTH ALLOCATION METHOD AND APPARATUS, ELECTRONIC DEVICE, AND COMPUTER READABLE STORAGE MEDIUM**

(30) Priority: 06.04.2022 CN 202210355740
(71) Applicant: ZTE Corporation, Shenzhen, Guangdong 518057 (CN)
(72) Inventor: QIAN, Ying, Shenzhen, Guangdong 518057 (CN)
(74) Representative: Canzler & Bergmeier Patentanwälte Partnerschaft mbB
(86) International application number: PCT/CN2023/071829
(87) International publication number: WO 2023/193504

(57) **Abstract**

The present disclosure provides a bandwidth allocation method, an electronic device, and a computer readable storage medium. The bandwidth allocation method comprises: determining an overall wide area network (WAN) interface bandwidth of a network according to capability information of a WAN interface of each node currently added to the network, wherein nodes comprise a master node and a slave node, and the WAN interface is an interface where the node is connected to the WAN; and allocating traffic to at least one egress node according to the current overall WAN interface bandwidth of the network and a bandwidth distribution condition of each node.

## Description

### CROSS-REFERENCE TO RELATED APPLICATIONS

The present application claims the priority of Chinese Patent Application CN202210355740.1, filed on April 6, 2022, entitled "BANDWIDTH ALLOCATION METHOD AND APPARATUS, ELECTRONIC DEVICE, AND COMPUTER READABLE STORAGE MEDIUM", the contents of which are incorporated herein in their entirety by reference.

### TECHNICAL FIELD

The present disclosure relates to the field of communications, and in particular, to a bandwidth allocation method, a bandwidth allocation apparatus, an electronic device and a computer readable storage medium.

### BACKGROUND

A wireless Mesh network (i.e., WMN) based on wireless fidelity (hereafter, referred to as Wi-Fi for short) generally includes one master node and at least one slave node. The master node serving as a main controller is a brain of the Mesh network, and is responsible for establishing and managing the Mesh network. The at least one slave node expands a coverage range of the Mesh network, and realizes, through the master node, a function of accessing a wide area network (hereafter, referred to as WAN for short).

### SUMMARY

The present disclosure provides a bandwidth allocation method, a bandwidth allocation apparatus, an electronic device, and a computer readable storage medium.

In a first aspect, the present disclosure provides a bandwidth allocation method, applied to a master node. The method may include: determining a total bandwidth of wide area network (WAN) interface of a network according to capability information of WAN interfaces of nodes joined the network; the nodes joined the network including the master node and a slave node, the WAN interface of any node being an interface of the node connected to a WAN; and allocating traffic to at least one of the nodes according to the total bandwidth of WAN interface of the network and a distribution of bandwidths of the nodes.

In a second aspect, the present disclosure provides a bandwidth allocation method, applied to a slave node. The method may include: reporting capability information of a WAN interface of the slave node to a master node; and forwarding traffic allocated by the master node to a WAN through the WAN interface.

In a third aspect, the present disclosure provides a bandwidth distribution apparatus. The apparatus may include: a node topology management module configured to acquire capability information of WAN interfaces of nodes joined a network; the nodes joined the network including a master node and a slave node, the WAN interface of any node being an interface of the node connected to a WAN; a WAN capability management module configured to determine a total bandwidth of WAN interface of the network according to the capability information of the WAN interfaces of the nodes joined the network; and a network access control module configured to allocate traffic to at least one of the nodes according to the total bandwidth of WAN interface of the network and a distribution of bandwidths of the nodes.

In a fourth aspect, the present disclosure provides an electronic device. The electronic device may include: at least one processor; a memory having at least one program stored thereon, the at least one program, executed by the at least one processor, causes the at least one processor to implement the bandwidth allocation method of the first aspect or the second aspect; and at least one I/O interface connected between the processor and the memory and configured to implement information interaction between the processor and the memory.

In a fifth aspect, the present disclosure provides a computer readable storage medium having a computer program stored thereon, the computer program, executed by a processor, causes the processor to implement the bandwidth allocation method of the first aspect or the second aspect.

### BRIEF DESCRIPTION OF DRAWINGS

Fig. 1 is a flowchart of a bandwidth allocation method according to the present disclosure.
Fig. 2 is a flowchart of a bandwidth allocation method according to the present disclosure.
Fig. 3 is a flowchart of a bandwidth allocation method according to the present disclosure.
Fig. 4 is a flowchart of a bandwidth allocation method according to the present disclosure.
Fig. 5 is a flowchart of a bandwidth allocation method according to the present disclosure.
Fig. 6 is a flowchart of a bandwidth allocation method according to the present disclosure.
Fig. 7 is a schematic diagram of a bandwidth allocation apparatus according to the present disclosure.
Fig. 8 is a schematic diagram of an application scenario of a bandwidth allocation method according to the present disclosure.
Fig. 9 is a schematic diagram of a scenario of Example I according to the present disclosure.
Fig. 10 is a processing flowchart of Example I according to the present disclosure.
Fig. 11 is a schematic diagram of a scenario of Example II according to the present disclosure.
Fig. 12 is a processing flowchart of Example II according to the present disclosure.
Fig. 13 is a schematic diagram of a scenario of Example III according to the present disclosure.
Fig. 14 is a processing flowchart of Example III according to the present disclosure.
Fig. 15 is a schematic diagram of an electronic device according to the present disclosure.
Fig. 16 is a schematic diagram of a computer readable storage medium according to the present disclosure.

### DETAIL DESCRIPTION OF EMBODIMENTS

It should be understood that the specific implementations described herein are only used to illustrate the present disclosure and do not limit the present disclosure.

In following description, suffixes such as "module", "component", or "unit" used to indicate elements are used only for facilitating the explanation of the present disclosure, and have no peculiar meaning by themselves. Thus, the terms "module", "component" and/or "unit" may replace each other.

In the description of embodiments of the present disclosure, 5G Customer Premise Equipment (CPE) on the market is taken as an example. A Mesh network based on Wi-Fi can enhance a coverage of Wi-Fi signals of the CPE, and if a wireless local area network (WLAN) is deployed as a Mesh network, an area of a coverage of signals of each single CPE in the WLAN is expanded, which facilitates users to join a WAN. However, after the users join the WAN, a bandwidth for the users accessing the WAN is limited by a bandwidth of a WAN interface of a master node in the Mesh network. The WAN interface of the master node in the Mesh network is a total interface of the Mesh network for accessing the WAN, which limits the bandwidth of the Mesh network for accessing the WAN in a great extent. With continuous evolution and replacement of Wi-Fi technologies, up to Wi-Fi6 network, a maximum bandwidth for the users at an ingress of the Mesh network is greatly improved. If the traffic of the users in the Mesh network for accessing the WAN increases, the WAN interface of the master node, serving as an egress of the Mesh network becomes a bottleneck of the Mesh network for accessing an external network (e.g., the WAN).

The CPE in the Mesh network generally has a capability of the WAN interface. Besides joining the Mesh network based on Wi-Fi, each CPE has a function of the WAN interface for joining a 5G network. According to any existing networking scheme for networking the Mesh network, after the Mesh network is established, an interface of the Mesh network for accessing the WAN is the WAN interface of the master node in the Mesh network. However, the WAN interface of any other CPE, serving as a slave node, has no contribution to a bandwidth for the users in the Mesh network to access the WAN.

In view of the above-mentioned problem that the bandwidth of the Mesh network for accessing the WAN is limited by the WAN interface of the master node, the present disclosure provides an effective solution for expanding the bandwidth of the Mesh network for accessing the WAN. In the solution, by referring to characteristics of the Mesh network, capabilities (e.g., bandwidths) of WAN interfaces of all nodes in the Mesh network are acquired based on a topology of the Mesh network, and are used for expanding the total bandwidth of the Mesh network for accessing the WAN. Therefore, the problem that the bandwidth of the Mesh network for accessing the WAN is limited by the WAN interface of the master node is solved, and the bandwidth of the Mesh network for accessing the WAN is optimized.

It should be noted that, for convenience of description, the Mesh network based on Wi-Fi is illustrated as an example in the present disclosure, but the present disclosure is not limited thereto. For any predictable network with a mechanism similar to the Mesh network based on Wi-Fi, the bandwidth allocation method, the bandwidth allocation apparatus, the electronic device, and the computer readable storage medium provided in the present disclosure may be applied.

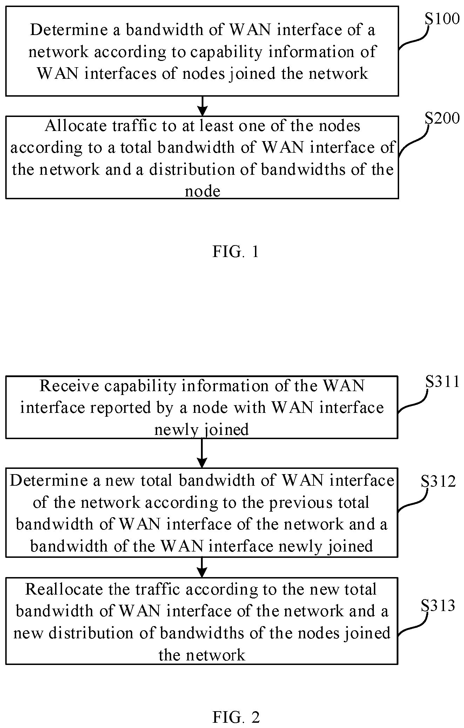

In a first aspect, the present disclosure provides a bandwidth allocation method applied to a master node, and as shown in Fig. 1, the method includes following operations S 100 and S200.

At operation S100, determining a total bandwidth of WAN interface of a network according to capability information of WAN interfaces of nodes joined the network; the nodes joined the network include the master node and a slave node, the WAN interface of any node is an interface of the node connected to a WAN.

At operation S200, allocating traffic to at least one of the nodes according to the total bandwidth of WAN interface of the network and a distribution of bandwidths of the nodes.

In the bandwidth allocation method provided in the present disclosure, the Mesh network is no longer limited to only the WAN interface of the master node serving as the egress of the Mesh network for accessing an external network, but expand the total bandwidth at the egress of the Mesh network by using the WAN interfaces of slave nodes.

The Mesh network networked with the CPE is still illustrated as an example, based on a characteristic that the CPE for networking the Mesh network has a capability of accessing a WAN, in the present disclosure, each node or a part of nodes in the Mesh network has a capability of the WAN interface. In a networking process of the Mesh network, a Mesh node having the WAN interface reports a bandwidth capability of the WAN interface to the master node, so that the master node calculates a total capability of WAN interface according to capabilities of the WAN interfaces of the nodes joined the network. If any user accesses the WAN through the Mesh network, data traffic of the user for accessing the WAN is distributed to at least one of the nodes joined the network, according to the calculated total capability of WAN interface. As a whole, the bandwidth of WAN interface of the Mesh network is expanded, the performance of the Mesh network is improved, and the user experience is significantly improved.

The Mesh network based on Wi-Fi is a dynamically updated network, and the Mesh node may join the network or exit from the network at any time. The bandwidth allocation method provided in the present disclosure can dynamically update and expand the network bandwidth (i.e., bandwidth for accessing an external network such as a WAN) according to a change condition of the Mesh network. In order to adapt to a dynamic change of nodes of the Mesh network, in the technical solution provided by the present disclosure, a total capability of WAN interface of the nodes joined the network and a distribution of bandwidths of the nodes are calculated in response to that a topology of the network is changed. Therefore, through a dynamic adaptive process, reliability and stability of the traffic in the Mesh network for accessing the external network are ensured.

In some implementations, in response to that a WAN interface newly joins the network, as shown in Fig. 2, the method further includes following operations S311 to S313.

At operation S311, receiving capability information of the WAN interface reported by a node with the WAN interface newly joined the network.

At operation S312, determining a new total bandwidth of WAN interface of the network according to the previous total bandwidth of WAN interface of the network and a bandwidth of the WAN interface newly joined the network.

At operation S313, reallocating the traffic according to the new total bandwidth of WAN interface and a new distribution of bandwidths of the nodes joined and in the network.

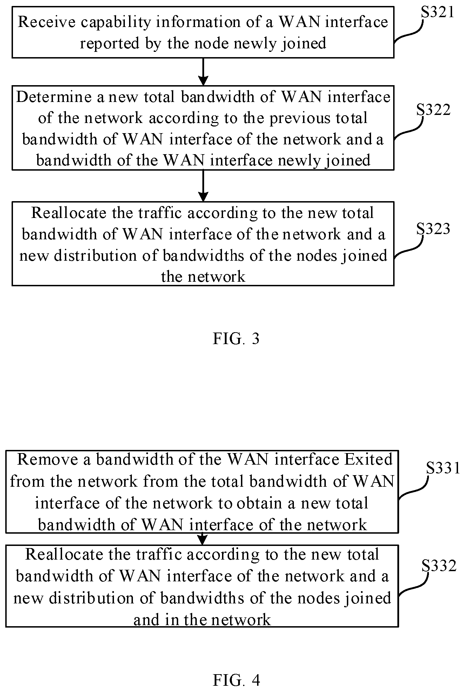

In some implementations, in response to that a node newly joins the network, as shown in Fig. 3, the method further includes following operations S321 to S323.

At operation S321, receiving capability information of a WAN interface reported by the node newly joined the network.

At operation S322, determining a new total bandwidth of WAN interface of the network according to the previous total bandwidth of WAN interface of the network and a bandwidth of the WAN interface of the node newly joined the network.

At operation S323, reallocating the traffic according to the new total bandwidth of WAN interface and a new distribution of bandwidths of the nodes joined and in the network.

Further, after receiving the capability information of the WAN interface reported by the node, and after a delay time T, determining the new total bandwidth of WAN interface of the network according to the previous total bandwidth of WAN interface of the network and the bandwidth of the WAN interface of the node newly joined the network is performed.

In a case where a WAN interface or node newly joins the network, the master node of the network may not put the WAN interface newly joined the network into use immediately, and is to observe for a period of time T to avoid damage to service due to oscillations of the interface. After an observation for the time T, if no abnormality such as oscillation is found for the WAN interface, the new total bandwidth of WAN interface of the Mesh network can be determined. Then, the traffic is reallocated according to the new total bandwidth of WAN interface and a new distribution of bandwidths of the nodes joined and in the network, so that the load on the nodes tends to be relatively balanced.

In some implementations, in the process of the observation, test traffic may be sent to detect whether an abnormal phenomenon such as packet loss or packet error occurs at the interface newly joined the network.

It should be noted that there is often a node joining the Mesh network or exiting from the Mesh network, the number of WAN interfaces may be different for different nodes, and a maximum bandwidth and a remaining bandwidth may also be different for different WAN interfaces. Therefore, it may be difficult to implement absolute load balancing in allocating the traffic, and a policy for allocating the traffic may be determined as desired. For example, a weight may be configured for the bandwidth of the WAN interface on any node. Alternatively, a proportion for allocating the traffic to the WAN interface on any node may be configured according to a proportion of a remaining bandwidth of the WAN interface on the node to the total bandwidth of WAN interface of the Mesh network. Alternatively, allocating the traffic may be performed in response to an order of bandwidths desired by the traffic being matched with an order of remaining bandwidths of the WAN interfaces. In the present disclosure, the specific manner or policy for allocating the traffic is not limited, and is not listed here one by one.

In some implementations, in response to that a WAN interface exits from the network, as shown in Fig. 4, the method further includes following operations S331 and S332.

At operation S331, removing a bandwidth of the WAN interface exited from the network from the total bandwidth of WAN interface of the network to obtain a new total bandwidth WAN interface of the network.

At operation S332, reallocating the traffic according to the new total bandwidth of WAN interface of the network and a new distribution of bandwidths of the nodes joined and in the network.

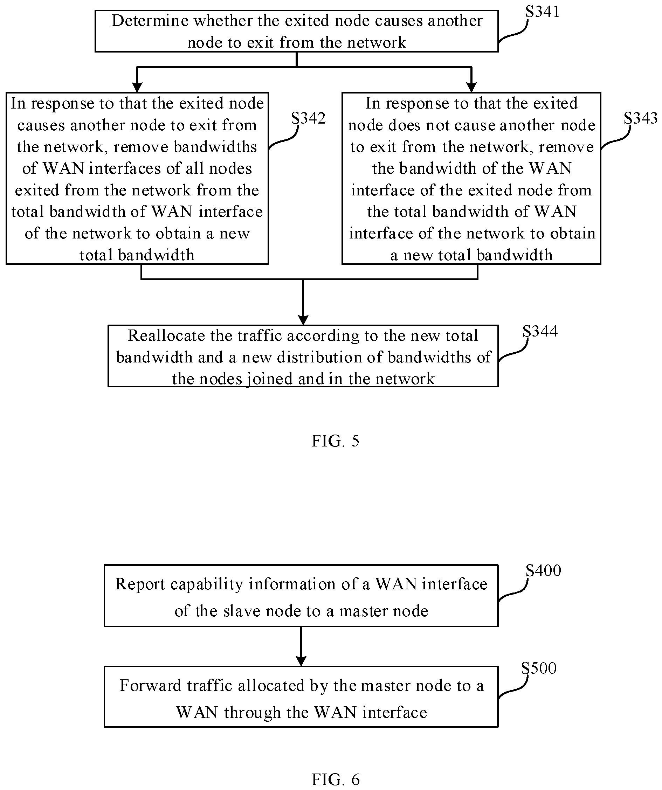

In some implementations, in response to that a node exits from the network, as shown in Fig. 5, the method further includes following operations S341 to S344.

At operation S341, determining whether another node exits from the network due to the node exited from the network.

At operation S342, in response to that another node exits from the network due to the node exited from the network, removing bandwidths of WAN interfaces of all nodes exited from the network from the total bandwidth of WAN interface of the network, to obtain a new total bandwidth of WAN interface of the network.

At operation S343, in response to that no another node exits from the network due to the node exited from the network, removing the bandwidth of the WAN interface of the node exited from the total bandwidth of WAN interface of the network, to obtain a new total bandwidth of WAN interface of the network.

At operation S344, reallocating the traffic according to the new total bandwidth of WAN interface of the network and a new distribution of bandwidths of the nodes joined and in the network.

In a second aspect, the present disclosure provides a bandwidth allocation method applied to a slave node, and as shown in Fig. 6, the method includes following operations S400 and S500.

At operation S400, reporting capability information of a WAN interface of the slave node to a master node.

At operation S500, forwarding traffic allocated by the master node to a WAN through the WAN interface.

It should be noted that, in the Mesh network, roles of the master node and the slave node are not constant, and any node may be selected as the master node or the slave node. Regardless of the roles of the nodes, operations in the bandwidth allocation method provided in the present disclosure are performed corresponding to the roles of the nodes. If any node serves as the master node, the node receives the capability information of the WAN interface reported by each slave node, and calculates a total maximum bandwidth and a total remaining bandwidth of WAN interface of the Mesh network according to information of maximum bandwidths and remaining bandwidths of WAN interfaces of the master node and slave nodes. Then, The master node allocates the traffic of the Mesh network for accessing an external network (e.g., WAN) to the nodes serving as egresses of the Mesh network, according to a distribution of bandwidths of the WAN interfaces on the nodes. If any node serves as the slave node, the node reports the capability information of the WAN interface to the master node during joining the Mesh network, so that the master node calculates the total bandwidth of WAN interface of the Mesh network and allocates the traffic. If the master node allocates the traffic to the slave node, the traffic is issued or transmitted to the WAN through the WAN interface of the slave node.

In a third aspect, the present disclosure provides a bandwidth allocation apparatus. The bandwidth allocation apparatus includes a node topology management module, a WAN capability management module and a network access control module. The node topology management module is configured to acquire capability information of WAN interfaces of nodes joined a network. The nodes include a master node and a slave node. The WAN interface of any node is an interface of the node connected to a WAN. The WAN capability management module is configured to determine a total bandwidth of WAN interface of the network according to the capability information of the WAN interfaces of the nodes joined the network. The network access control module is configured to allocate traffic for accessing the WAN to at least one of the nodes joined the network according to the total bandwidth of WAN interface of the network and a distribution of bandwidths of the nodes.

In the bandwidth allocation apparatus provided in the present disclosure, the node topology management module is responsible for managing structure information of a topology of the Mesh network during a communication of Mesh nodes in the Mesh network. In a process of networking and operating of the Mesh network, the Mesh nodes are dynamically changed, and there may be CPE joining the Mesh network and/or CPE exiting from the Mesh network at any time. Therefore, the node topology management module is adopted for dynamically managing a change of the topology of the network.

The WAN capability management module is to manage, according to the topology of the network provided by the node topology management module, all nodes with an WAN interface in the network and output a total bandwidth (i.e., capability) of WAN interface of the network to the network access control module of the node.

The network access control module controls, according to the total bandwidth of WAN interface of the network and a distribution of bandwidths of the nodes joined the network, services for accessing the WAN, determines allocation and control of Mesh nodes for accessing the WAN, to provide a bandwidth for accessing the WAN and a stable service for users.

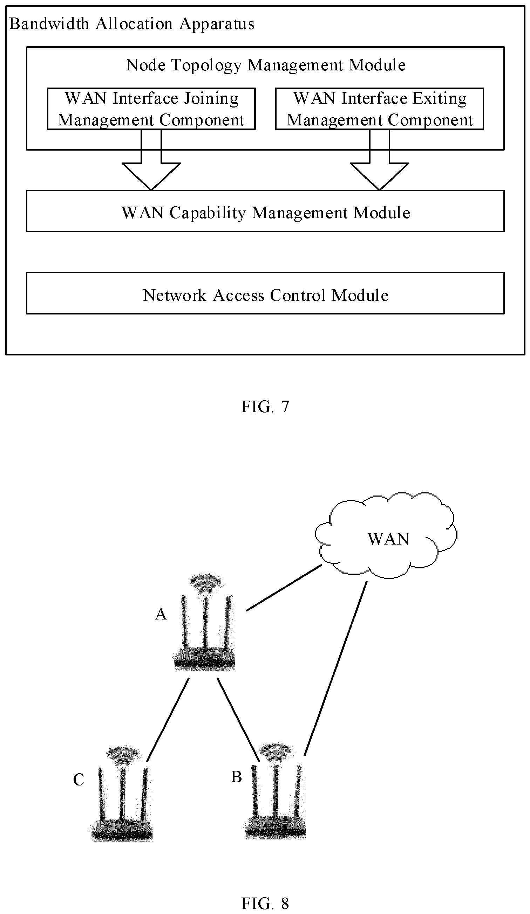

As shown in Fig. 7, the node topology management module further includes a WAN interface joining management component and a WAN interface exiting management component. The WAN interface joining management component is configured to determine a topology of the network after any WAN interface or node newly joins the network, and trigger the WAN capability management module to calculate the total bandwidth of WAN interface of the network. The WAN interface exiting management component is configured to determine a topology of the network after any WAN interface or node exits from the network, and trigger the WAN capability management module to calculate the total bandwidth of WAN interface of the network.

Specific applications of the bandwidth allocation methods described in the first aspect and the second aspect of the present disclosure in an actual service accessing an external network are described in detail below with reference to three examples.

Firstly, scenes of the applications of Examples I to III are briefly described. Fig. 8 shows a Mesh network having an expanded WAN interface. As shown in Fig. 8, the Mesh network has three Mesh nodes including a master node A and two slave nodes B. The WAN interface of the master node A is WAN1, each of the WAN interfaces of the slave nodes B is WAN2, and another node C does not have a capability of a WAN interface. In the existing art, any user accesses an external network only through the master node A, and thus the bandwidth for accessing the external network is limited by a bandwidth of the WAN1. In the technical solution of the present disclosure, if the user accesses the external network through the Mesh network, and a bandwidth for the user accessing the external network is greater than a maximum bandwidth of the WAN1 of the master node A and is also greater than a maximum bandwidth of the WAN2 of the node B, the traffic of the user for accessing the external network is to be allocated to more than one of the nodes having capabilities of WAN interfaces in the Mesh network. Therefore, expectations of the user on the bandwidth for accessing the external network are met to a maximum extent. Since the Mesh network is dynamically networked, there may be any node newly joining the Mesh network at any time, any node in the Mesh network may exit from the Mesh network at any time, and in the technical solution of the present disclosure, a total bandwidth of WAN interface of the Mesh network may be dynamically changed. For example, a network bandwidth provided to the user in Examples I to III may be dynamically changed due to the slave node B joining or exiting from the Mesh network.

The present disclosure expands the total bandwidth of WAN interface of the Mesh network by considering following three scenes. In a first scene, a scene of calculating a bandwidth of WAN interface of the Mesh network after the Mesh network is established. In a second scene, any CPE newly joins the Mesh network. In a third scene, any CPE exits from the Mesh network.

### Example I

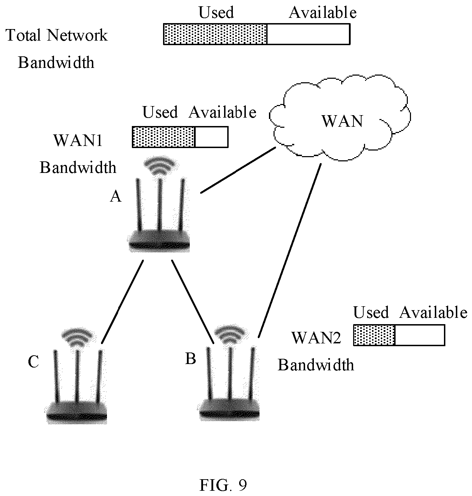

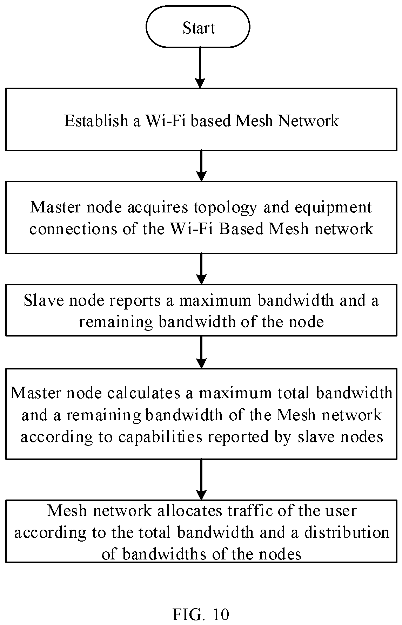

The Example I mainly aims at the first scene, and Fig. 9 is a schematic diagram showing a topology of the scene of calculating the bandwidth of WAN interface of the Mesh network. A flow of networking the Mesh network based on Wi-Fi having expanded bandwidth of WAN interface is as shown in Fig. 10. In the present disclosure, after the Mesh network based on Wi-Fi is established, the master node acquires topology information and equipment connections of the Mesh network. All nodes joined the Mesh network report capabilities of WAN interfaces thereof to the master node, the capability of the WAN interface includes whether the node has a capability of a WAN interface, a maximum bandwidth of the WAN interface and an occupied bandwidth of the WAN interface (i.e., the bandwidth that has been occupied). The master node calculates a maximum bandwidth and a remaining bandwidth of WAN interface of the Mesh network according to the capabilities (i.e., bandwidths) of the WAN interfaces of the nodes joined the Mesh network. If any user accesses an external network through the Mesh network, the Mesh network dynamically allocates the traffic of the user for accessing the external network according to a total bandwidth of WAN interface of the Mesh network and a distribution of bandwidths of the nodes joined the Mesh network.

### Example II

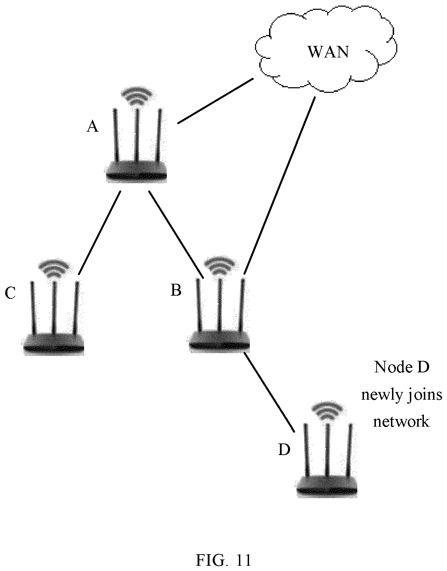

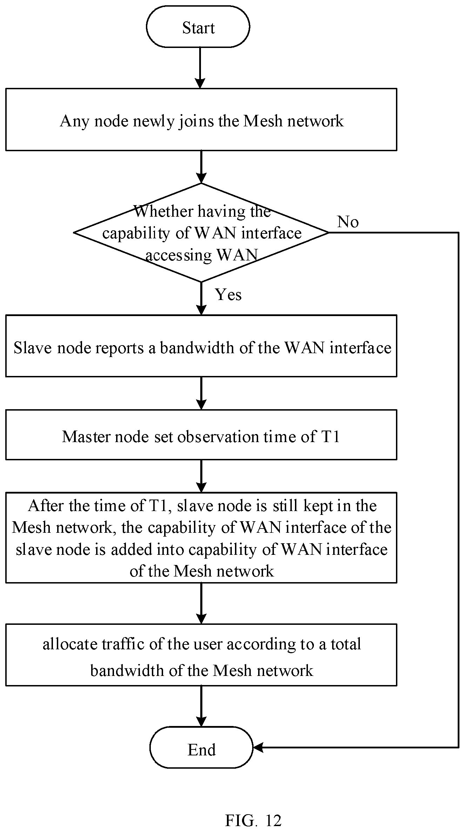

The Example II mainly aims at the second scene, and Fig. 11 is a schematic diagram showing a topology of a scene of a Mesh node newly joining the Mesh network. A process of the Mesh node joining the Mesh network is as shown in Fig. 12. As shown in Fig. 12, if any Mesh node newly joins the Mesh network, whether the node has the capability of the WAN interface and a bandwidth of the WAN interface of the node for accessing an external network are expected to be checked. For any slave node newly joined the Mesh network, the slave node reports parameters such as the bandwidth of the WAN interface thereof to the master node in the Mesh network. The master node dose not immediately consider to use the capability of the WAN interface of the newly joined node, but sets an observation time T1, so as to observe whether the newly joined node is unstable, for example, whether the newly joined node is frequently online and offline. If the slave node is still in the Mesh network after the observation time T, the capability of the WAN interface of the slave node is included into the total capability of WAN interface of the Mesh network, and the total WAN interface of the Mesh network is expanded. According to expectations of the user on the bandwidth for accessing the external network, a total bandwidth of WAN interface of the Mesh network and a distribution of WAN interfaces in the Mesh network, the traffic for accessing the external network is allocated to at least one of the nodes joined and in the Mesh network.

### Example III

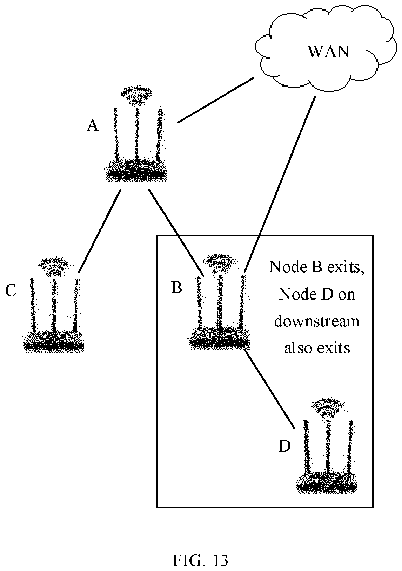

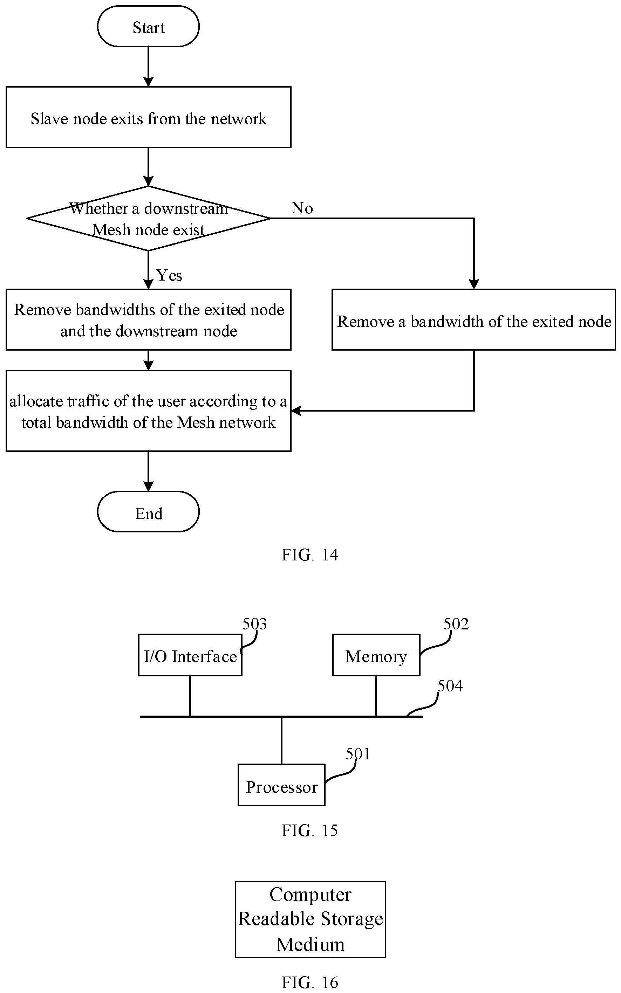

The Example III mainly aims at the third scene, and Fig. 13 is a schematic diagram showing a topology of a scene of a Mesh node exiting from the Mesh network. A process of the node exiting from the network is as shown in Fig. 14. As shown in Fig. 14, in a case where a slave node exits from the network, the capability (i.e., bandwidth) of the WAN interface provided by the slave node is removed from the total capability (i.e., bandwidth) of WAN interface of the network. Moreover, according to a position of the slave node exited from the network in the topology of the Mesh network, whether there is another Mesh node at a downstream of the slave node exited form the network. If there is no Mesh node connected to the slave node exited from the network at the downstream of the slave node, the bandwidth of the WAN interface of the slave node exited from the network is removed from the total bandwidth of WAN interface of the network. If there is any Mesh node connected to the slave node exited from the network at the downstream of the slave node, the Mesh node connected at the downstream of the slave node exited form the network also exits from the network. Therefore, the bandwidth of the WAN interface of the Mesh node at the downstream of the slave node exited from the network is also removed. That is, bandwidths of WAN interfaces of the slave node exited from the network and the Mesh node at the downstream of the slave node are removed from the total bandwidth of WAN interface of the network. After the node or nodes exits from the network, the network (including parameters thereof) is updated. Then, according to expectations of the user on the bandwidth for accessing the external network, an updated total bandwidth of WAN interface of the network and an updated distribution of WAN interfaces in the Mesh network, the traffic of the user for accessing the external network is allocated to at least one of the nodes joined and in the network.

In a fourth aspect, the present disclosure provides an electronic device. The electronic device includes at least one processor 501, a memory 502 and at least one I/O interface. The memory 502 has at least one program stored thereon, the at least one program, executed by the at least one processor, causes the at least one processor to implement the bandwidth allocation method of the first aspect or the second aspect. The at least one I/O interface is connected between the processor and the memory and configured to implement information interaction between the processor and the memory.

The processor 501 is a device having a capability of processing data, and includes, but is not limited to, a Central Processing Unit (CPU), and the like. The memory 502 is a device having a capability of storing data, and includes, but is not limited to, a random access memory (RAM, in particular, SDRAM, DDR, and the like), a read only memory (ROM), an electrically erasable programmable read only memory (EEPROM), and a FLASH. The I/O interface 503 is connected between the processor 501 and the memory 502, can implement information interaction between the processor 501 and the memory 502, and includes, but is not limited to, a data Bus, and the like.

In some implementations, the processor 501, the memory 502, and the I/O interface 503 are connected together through a bus 504, and are further connected to other components of a computing device.

In a fifth aspect, the present disclosure provides a computer readable storage medium, as shown in Fig. 16, the computer readable storage medium has a computer program stored thereon, and the computer program, executed by a processor, causes the processor to implement the bandwidth allocation method of any one of the first aspect and the second aspect.

At present, the Mesh network based on WLAN becomes a popular application for deploying wireless networks in families and offices. The present disclosure may be applied to deployment of products in the Mesh network based on WLAN, and on a basis of existing CPE, the total bandwidth of WAN interface of the Mesh network is expanded by using the capabilities of the WAN interfaces of the slave nodes. Therefore, reliability and stability of the Mesh network are enhanced, and the user experience during using the products in the Mesh network is improved.

It should be understood by those of ordinary skill in the art that all or some of the operations in the method, systems, the functional modules/components in the apparatuses stated above may be implemented as software, firmware, hardware, or suitable combinations thereof.

In a hardware implementation, the division between the functional modules/components stated above does not correspond to the division of physical components; for example, one physical component may have a plurality of functions, or one function or operation may be performed through a cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be distributed on a computer readable medium, the computer readable medium may include computer storage medium (or non-transitory medium) and communication medium (or transitory medium). The computer storage medium includes volatile/nonvolatile or removable/non-removable medium used in any method or technology for storing information (such as computer readable instructions, data structures, program modules and other data). The computer storage medium includes, but is not limited to, a Random Access Memory (RAM), a Read-Only Memory (ROM), an Electrically Erasable Programmable Read-Only Memory (EEPROM), a flash memory or other memory techniques, a Compact Disc Read-Only Memory (CD-ROM), a Digital Video Disk (DVD) or other optical discs, magnetic cassettes, magnetic tapes, magnetic disks or other magnetic storage devices, or any other medium which can be used to store the desired information and can be accessed by a computer. The communication medium generally includes computer readable instructions, data structures, program modules or other data in a modulated data signal, such as a carrier wave or other transmission mechanism, and may include any information delivery medium.

The exemplary implementations of the present disclosure are described above with reference to the accompanying drawings, and are not intended to limit the scope of the claims of the present disclosure. Any modifications, equivalents, and improvements made by those skilled in the art without departing from the scope and essence of the present disclosure are intended to be within the scope of the claims of the present disclosure.

## Claims

1. A bandwidth allocation method, applied to a master node, comprising:
determining a total bandwidth of wide area network (WAN) interface of a network according to capability information of WAN interfaces of nodes joined the network; wherein the nodes comprise the master node and a slave node, the WAN interface of any node is an interface of the node connected to a WAN; and
allocating traffic to at least one of the nodes according to a total bandwidth of WAN interface of the network and a distribution of bandwidths of the nodes.

2. The method of claim 1, wherein, in response to that a WAN interface joins the network, the method further comprises:
receiving capability information of the WAN interface reported by a node with the WAN interface newly joined the network;
determining a new total bandwidth of WAN interface of the network according to the previous total bandwidth of WAN interface of the network and a bandwidth of the WAN interface newly joined the network; and
reallocating the traffic according to the new total bandwidth of WAN interface of the network and a new distribution of bandwidths of the nodes joined the network.

3. The method of claim 1, wherein, in response to that a node joins the network, the method further comprises:
receiving capability information of a WAN interface reported by the node newly joined the network;
determining a new total bandwidth of WAN interface of the network according to the previous total bandwidth of WAN interface of the network and a bandwidth of the WAN interface of the node newly joined the network; and
reallocating the traffic according to the new total bandwidth WAN interface of the network and a new distribution of bandwidths of the nodes joined the network.

4. The method of claim 2 or 3, wherein, after receiving the capability information of the WAN interface reported by the node, and after a delay time T, determining the new total bandwidth of WAN interface of the network according to the previous total bandwidth of WAN interface of the network and the bandwidth of the WAN interface newly joined the network is performed.

5. The method of any one of claims 1 to 3, wherein, in response to that any WAN interface exits from the network, the method further comprises:
removing a bandwidth of the WAN interface exited from the network from the total bandwidth of WAN interface of the network to obtain a new total bandwidth of WAN interface of the network;
reallocating the traffic according to the new total bandwidth of WAN interface of the network and a new distribution of bandwidths of the nodes joined and in the network.

6. The method of any one of claims 1 to 3, wherein, in response to that any node exits from the network, the method further comprises:
determining whether the node exited from the network causes another node to exit from the network;
in response to that the node exited from the network causes another node to exit from the network, removing bandwidths of WAN interfaces of all nodes exited from the network from the total bandwidth of WAN interface of the network to obtain a new total bandwidth of WAN interface of the network;
in response to that the node exited from the network does not cause another node to exit from the network, removing the bandwidth of the WAN interface of the node exited from the total bandwidth of WAN interface of the network to obtain a new total bandwidth of WAN interface of the network;
reallocating the traffic according to the new total bandwidth of WAN interface of the network and a new distribution of bandwidths of the nodes joined and in the network.

7. A bandwidth allocation method, applied to a slave node, comprising:
reporting capability information of a WAN interface of the slave node to a master node; and
forwarding traffic allocated by the master node to a WAN through the WAN interface.

8. A bandwidth allocation apparatus, comprising:
a node topology management module configured to acquire capability information of WAN interfaces of nodes joined a network; wherein the nodes comprise a master node and a slave node, the WAN interface of any node is an interface of the node connected to a WAN;
a WAN capability management module configured to determine a total bandwidth of WAN interface of the network according to capability information of the WAN interface of the nodes joined the network; and
a network access control module configured to allocate traffic to at least one of the nodes joined the network according to a total bandwidth of WAN interface of the network and a distribution of bandwidths of the nodes joined the network.

9. The apparatus of claim 8, wherein the node topology management module comprises:
a WAN interface joining management component configured to determine a topology of the network after any WAN interface or node joins the network, and trigger the WAN capability management module to calculate the total bandwidth of WAN interface of the network;
a WAN interface exiting management component configured to determine a topology of the network after any WAN interface or node exits from the network, and trigger the WAN capability management module to calculate the total bandwidth of WAN interface of the network.

10. An electronic device, comprising:
at least one processor;
a memory having at least one program stored thereon, the at least one program, executed by the at least one processor, causes the at least one processor to implement the bandwidth allocation method of any one of claims 1 to 7;
at least one I/O interface connected between the processor and the memory and configured to implement information interaction between the processor and the memory.

11. A computer readable storage medium having a computer program stored thereon, the computer program, executed by a processor, causes the processor to implement the bandwidth allocation method of any one of claims 1 to 7.
